**Europäisches Patentamt**

(19) **European Patent Office**

**Office européen des brevets**

(11) Publication number: **0 184 796**
**B1**

(12) **EUROPEAN PATENT SPECIFICATION**

(45) Date of publication of patent specification: **18.04.90**

(21) Application number: **85115589.5**

(22) Date of filing: **07.12.85**

(51) Int. Cl.⁵: **C 09 J 5/06, B 60 R 13/00**

(54) Method of lining, using fabrics and the like, generic articles of manufacture; in particular articles for motor vehicle interior fitting, and system implementing said method.

(30) Priority: **12.12.84 IT 6823984**

(43) Date of publication of application:
**18.06.86 Bulletin 86/25**

(45) Publication of the grant of the patent:
**18.04.90 Bulletin 90/16**

(84) Designated Contracting States:
**DE FR GB SE**

(56) References cited:
**FR-A-2 358 982**
**FR-A-2 534 846**
**GB-A- 599 652**
**GB-A-2 077 650**

(73) Proprietor: **FIAT AUTO S.p.A.**
**Corso Giovanni Agnelli 200**
**I-10135 Torino (IT)**

(72) Inventor: **Bossano, Mario**
**Via Giacomo Alloatti 12**
**I-10029 Villastellone (Torino) (IT)**

(74) Representative: **Jacobacci, Guido et al**
**Jacobacci-Casetta & Perani S.n.c. Via Alfieri 17**
**I-10121 Torino (IT)**

Courier Press, Leamington Spa, England.

## Description

The present invention relates to a method and a system for lining with fabrics and the like generic motor vehicle interior articles of manufacture, such as panels, doors, armrests, rest shelves, and the like, as formed from any rigid material.

Such articles of manufacture are currently lined manually by traditional upholstering operations that require long working times and highly qualified labour thereby the use of upholstered furnishing items is becoming increasingly sparser, and in the field of motor vehicles, limited to high quality products.

Also known are automated methods whereby the covering is assembled at the article moulding stage, but such methods are limited in application, on the one side, to articles of a thermoformable plastic material, and on the other side, fail to reproduce the typical aesthetic effect of coverings applied by manual upholstering operations.

In the FR—A—2 358 982 is described a method of previously forming of the base material and subsequent moulding of the overlay in the matrix.

An object of the present invention is to provide a method of upholstering in an automated fashion preformed articles from a generic material by the application of coverings of fabric, cloth, and the like, which once applied, assume an aesthetic effect which is the perfect equivalent of similar coverings provided by manual upholstering operations.

Another object of the present invention is to provide an automated upholstering method which is applicable to any types of preformed rigid support, with either smooth, or ribbed, or otherwise contoured surfaces.

A further object of the invention is to provide a method which is simple, inexpensive, highly efficient, and suitable for the realization of a conspicuous product series.

To achieve these and other objects to become apparent from the detailed description that follows, the present invention has for its subject an automated upholstering method characterised by the following sequence of operative steps:

placing the article to be covered on the patrix of a press having a contour matching the surface of the article itself opposed to that to be covered such that the latter is left exposed; said patrix serving a function of article centering and retaining,

spreading thermo-curable adhesive over the surface of the article intended to receive the covering,

inserting the covering while holding it stretched by means of a retaining frame, between said patrix carrying the article and a matrix having a contour matching the surface of the article intended to receive the covering; the plane of lay of the covering being located substantially overlaying to said surface,

closing the press while maintaining the patrix and matrix at a temperature corresponding to the curing temperature of the adhesive,

opening the press, withdrawing the upholstered article and removing the waste by trimming or shearing.

The method of the invention is implemented by a press comprising a rigid patrix and a matrix of silicone rubber, both maintainable at a temperature corresponding to the curing temperature of a thermo-curable adhesive, between which there is interposed a structure carrying the stretching and supporting frame for the covering fabric comprising a clamping frame for said fabric. The latter may be either rigid or elastic; a fabric having an increased degree of elasticity being selected as the degree of surface complexity of the article to be lined by upholstering increases.

Further features and advantages will be apparent from the following detailed description and with reference to the accompanying drawings, given herein by way of example and not of limitation, where:

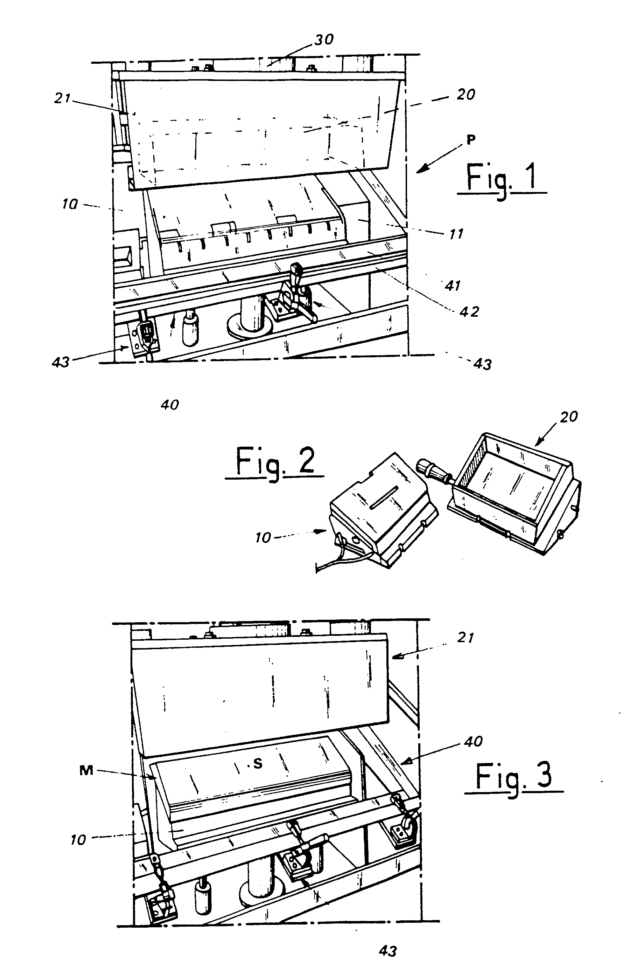

Figure 1 is a perspective view of the press for implementing the method according to the invention;

Figure 2 is a perspective view of the patrix and matrix equipping said press;

Figure 3 is a view of the press similar to Figure 1 showing the first step of the method;

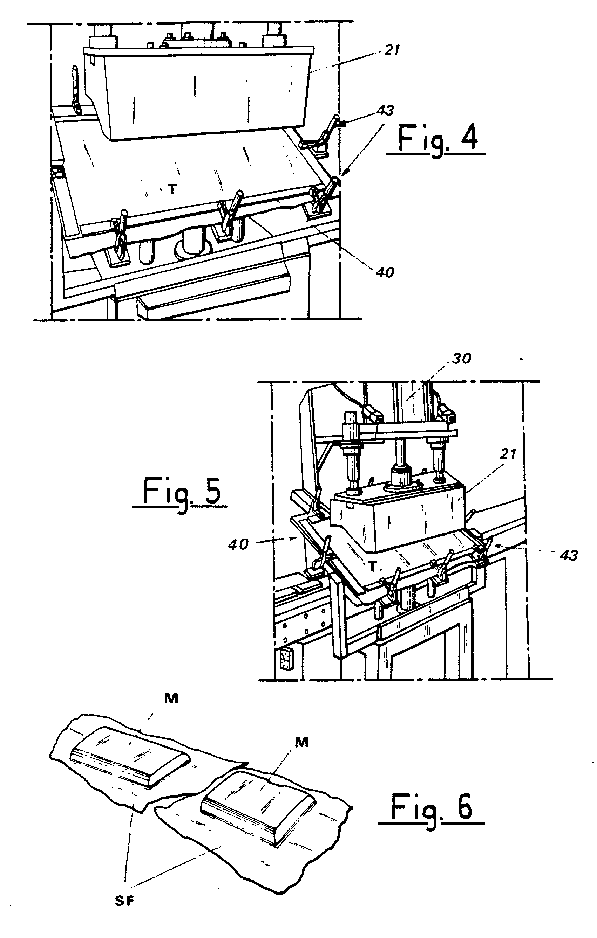

Figures 4 and 5 are views similar to the preceding ones showing successive operative steps of the method; and

Figure 6 is a perspective view showing the article upholstered prior to the waste removal step.

In the drawings, the reference numerals 10 and 20 indicate the patrix and matrix, respectively, of a hydraulic press P having respective holders 11—21 for said patrix and matrix. At least one of said holders of the press is movable and subjected to a double-acting hydraulic ram 30 capable of producing the pressure required to press the patrix and matrix together.

The patrix 10, which is preferably of metal, is substantially formed with a contour matching the inner surface of the article itself, that is the remote surface from that, indicated at S, intended to receive the covering. Thus, the patrix, in addition to serving the function of a reaction element, also serves as an article centering and retaining element.

The matrix 20 has a silicone rubber insert or active portion having a contour matching the contour of the article surface intended to receive the covering.

Both the patrix and matrix are heated and maintained at a temperature in the range of 60° to 80°C. According to the invention the press P comprises, in addition to the patrix and matrix holders 11—21, a frame 40 located between said holders but outside of the peripheral outline thereof. The frame 40 is formed by superimposed sub-frames 41—42 adapted to clamp on the peripheral flaps of the covering fabric T to hold said fabric stretched between the two holders 11 and 21 of the press. The sub-frames 41—42 of the frame may be clamped by means of a plurality of manually controlled clamps 43 or by means of centrally controlled hydraulic or electromagnetic clamps (not shown). The frame 40 is preferably orientable on mutually orthogonal planes and adjustable in elevation, to allow the fabric covering to be arranged in overlaying or adjacent tangential relationship with the article to be lined.

For implementing the method of the present invention, one proceeds as follows:

with the press opened, the article M to be lined is placed on the patrix 10 which forms the reaction element to the thrust of the press's movable holder and also provides for the article's centering and retaining:

a thin layer of a thermo-curable adhesive is spread, preferably by means of spray nozzles (not shown), over the surface S of the article M.

Advantageously, the thermo-curable adhesive is of the type which is initially in liquid or past like form which does not avail itself of adhesive qualities at ambient temperatures, but which becomes adhesive and is curable upon being subjected to heating.

Thereafter, the covering fabric T is inserted in between the sub-frames of the frame 40, clamping its peripheral flaps between said sub-frames. This operation may be carried out manually by utilising each time pieces of fabric having a surface area which is proportional to the surface area of the article to be lined. Preferably, the surface area of the fabric will be about 20% larger than the overall extent of the surface area of the article intended to receive the covering.

The fabric insertion may also be made in a continuous fashion by paying out each time from a fabric roll the amount required which will be fed, by means of appropriate puller means such as, for example, entrainment rollers, located between the sub-frames of the frame, clamped between said sub-frames and cut into pieces by means of a conventional powered or manual cutter or shears. In that case, the closure members for the sub-frames of the frame may be of the so-called centralised control type and the opening and closing command may advantageously be imparted to them automatically by means of computer or electromechanical control means adapted for operation in synchronisation with the incremental feeding of the fabric.

The frame 40 is positioned so as to bring the fabric stretched thereon into a substantially tangential or overlaying contact relationship with the surface of the article M.

The press is then closed with the patrix and matrix expediently maintained at the temperature corresponding to the curing temperature of the adhesive for a slightly longer time period than the adhesive's curing time. The closing pressure depends on various factors and mainly on the elasticity of the fabric being used and the nature of the surface S. Illustratively, that pressure may be in the range of 5 to 15 kg/cm$^2$; the values increasing with the fabric's elasticity and the degree of irregularity of the form of the article to be covered.

On completion of the pressing step, the press is opened and the article withdrawn which following removal of the waste SF, by shearing means such as cutters or shears, will assume the character of the finished piece.

The elasticity of the fabric forming the covering may also be varied and is advantageously selected in relation to the degree of irregularity of all, or part of, the surface to be covered. That fabric may have a variously differentiated ratio of weight to surface area and may be preliminarily bonded, as by an adhesive, or heat moulding, or other known techniques, to a foam layer adapted for simulating traditional upholstery padding.

Thus, the invention achieves its objects, and in particular a method of upholstering autovehicle interior fittings is provided which is implementable on highly automated plant requiring a minimum of manual intervention.

Advantageously, the matrix of silicon rubber, by virtue of its inherent qualities of elasticity, allows the matrix, to precisely adapt to the shape of the patrix and simultaneously cause the forces imposed thereon to be evenly distributed, thereby compensating any localized pressures.

Of course, within the invention principle, the constructional details and embodiments may be amply changed with respect to what has been described and illustrated, by way of non-limitative example, without departing from the scope of the invention.

**Claims**

1. A method of lining, using fabrics and the like, generic articles of manufacture, in particular articles for motor vehicle interior fitting, characterised in that it comprises the following operative steps:

placing the article to be covered on the patrix of a press having a contour matching the surface of the article itself opposed to that to be covered such that the latter is left exposed; said patrix serving a function of article centering and retaining:

spreading a thermo-curable adhesive over the surface of the article intended to receive the covering;

inserting the covering while holding it stretched by means of a retaining frame, between said patrix carrying the article and a matrix having a contour matching the surface of the article intended to receive the covering; the plane of lay of the covering being located substantially tantential to said surface;

closing the press while maintaining the patrix and the matrix at a temperature corresponding to the curing temperature of the adhesive;

opening the press, withdrawing the upholstered article and removing the waste by trimming or shearing.

2. A method according to Claim 1, characterised in that the covering is inserted in between the patrix and matrix in the form of a piece having proportioned dimensions to the extent of the article surface to be covered; the piece dimensions exceeding by about 20% the area of said surface.

3. A method according to Claim 1, wherein the covering is fed continuously to said stretching frame and cut into pieces after being inserted in between the press patrix and matrix.

4. A method according to Claim 1 and either Claim 2 or 3, characterized in that it uses an elastic fabric the elastic degree of which is selected in relation to the degree of irregularity and/or surface characteristics of the article to be covered.

5. A method according to any of the preceding claims, wherein the active portion of the matrix is of silicone rubber.

6. A method according to the preceding claims, wherein the patrix and matrix are maintained at a temperature in the range of 60° to 80°C.

7. A method according to the preceding claims, wherein the patrix and matrix closure pressure is in the range of 5 to 15 kg/cm$^2$.

8. A system for implementing the method of Claims 1 to 7, characterized in that it comprises a rigid patrix and a matrix of silicone rubber, both being adapted for being maintained at a desired temperature, between which there is interposed a structure carrying a stretching and supporting frame for the covering fabric to be applied to an article placed on said patrix.

9. A system according to Claim 8, wherein the stretching frame is orientable on mutually orthogonal planes and formed by superimposed subframes adapted to clamp on the peripheral flaps of the covering fabric.

10. A system according to Claims 8 and 9, characterised in that it comprises manually controlled clamps for closing said sub-frames of the stretching frame.

11. A system according to Claims 8 and 9, characterised in that it comprises centrally controlled hydraulic clamps for closing said subframes of the stretching frame.

12. A system according to Claims 8, 9 and 11, characterised in that it comprises means for feeding the fabric continuously to said stretching frame and cutting means for cutting said fabric into pieces after its positioning and clamping in the stretching frame.

## Patentansprüche

1. Verfahren zum Verkleiden von unter einen Oberbegriff fallenden, fabrikmäßig hergestellten Gegenständen unter Verwendung von Textilwaren und dergl., insbesondere Gegenstände für die Innenausrüstung von Motorfahrzeugen, gekennzeichnet durch die folgenden Arbeitsschritte:

—Anordnung des zu verkleidenden Gegenstandes auf dem Stempel einer Presse, der eine Kontur aufweist, die der der zu verkleidenden Oberfläche gegenüberliegenden Oberfläche entspricht, in der Weise, daß die zu verkleidende Oberfläche freiliegt, wobei der Stempel die Funktion des Zentrierens und des Haltens für den Gegenstand erfüllt;

—Auftragen eines wärmeaushärtbaren Klebers auf der zum Empfang der Verkleidung vorgesehenen Oberfläche;

—Einsetzen der Verkleidung zwischen dem den Gegenstand tragenden Stempel und einer Matrix, die eine Kontur aufweist, die der zum Empfang der Verkleidung vorgesehenen Oberfläche des Gegenstandes entspricht, während die Verkleidung durch Mittel eines Halterahmens gestreckt gehalten wird, wobei die Lagerfläche der Verkleidung im wesentlichen tangential zu der Oberfläche angeordnet ist;

—Schließen der Presse, während der Stempel und die Matrix auf einer Temperatur gehalten werden, die der Aushärttemperatur des Klebers entspricht;

—Öffnen der Presse, Herausnahme des aufgepolsterten Gegenstandes und entfernen des Abfalls durch Säubern oder Abscheren.

2. Verfahren nach Anspruch 1, dadurch gekennzeichnet, daß die Verkleidung zwischen dem Stempel und der Matrix in einem Stück eingesetzt wird, welches Abmaße in einem bestimmten Verhältnis zu der zu verkleidenden Oberfläche des Gegenstandes aufweist, wobei die Abmaße des Stückes die Fläche der Oberfläche um 20% überschreiten.

3. Verfahren nach Anspruch 1, dadurch gekennzeichnet, daß die Verkleidung kontinuierlich dem Streckrahmen zugeführt und nach dem Einsetzten zwischen dem Pressentempel und der Pressenmatrix in Stücke geschnitten wird.

4. Verfahren nach einem der Ansprüche 1—3, dadurch gekennzeichnet, daß es elastische Textilwaren verwendet, wobei deren Elastizitätsgrad in bezug zu dem Grad der Unregelmäßigkeit und/oder zu den Oberflächencharakteristiken des zu verkleidenden Gegenstandes gewählt wird.

5. Verfahren nach einem der vorstehenden Ansprüche, dadurch gekennzeichnet, daß der wirksame Abschnitt der Matrix aus Silikongummi hergestellt ist.

6. Verfahren nach einem der vorstehenden Ansprüche, dadurch gekennzeichnet, daß der Stempel und die Matrix bei einer Temperatur im Bereich von 60°—80°C gehalten werden.

7. Verfahren nach einem der vorstehenden Ansprüche, dadurch gekennzeichnet, daß der Schließdruck für den Stempel und die Matrix im Bereich zwischen 5—15 kg/cm$^2$ liegt.

8. Anlage zum Durchführen des Verfahren nach einem der Ansprüche 1—7, dadurch gekennzeichnet, daß sie einen steifen Stempel und eine Matrix aus Silikongummi umfaßt, wobei beide geeignet sind, bei einer gewünschten Temperatur gehalten zu werden, und zwischen welchen eine Einrichtung angeordnet ist, die einen Streck- und Halterahmen für die auf einem auf dem Stempel angeordneten Gegenstand vorgesehene Verkleidung trägt.

9. Anlage nach Anspruch 8, dadurch gekennzeichnet, daß der Streckrahmen wechselweise auf orthogonale Flächen ausrichtbar ist und durch übereinanderliegende Hilfrahmen geeignete Spanneinrichtungen an den Umfangslappen der Textilkleidung bildet.

10. Anlage nach Anspruch 8 oder 9, dadurch gekennzeichnet, daß sie von Hand steuerbare Spanneinrichtungen zum Schließen der Hilfsrahmen des Streckrahmens aufweist.

11. Anlage nach Anspruch 8 oder 9, dadurch gekennzeichnet, daß sie zentral gesteuerte Hydraulik-Spanneinrichtungen zum Schließen der Hilfsrahmen des Streckrahmens aufweist.

12. Anlage nach einem der Ansprüche 8, 9, und 11, dadurch gekennzeichnet, daß sie eine Einrichtung zum kontinuierlichen Zuführen der Textilwaren zu dem Streckrahmen und eine Schneideinrichtung zum Schneiden der Textilwaren in Stücke aufweist, nach dem diese in den Streckrahmen angeordnet und eingespannt sind.

**Revendications**

1. Procédé de garnissage, à l'aide d'étoffes et analogues, d'articles manufacturés génériques, en particulier d'articles pour garnissage de l'intérieur de véhicules à moteur, caractérisé en ce qu'il comprend les étapes suivantes:

la disposition de l'article à revêtir sur le moule mâle d'une presse, ayant un profil correspondant à la surface de l'article lui-même qui est opposée à celle qui doit être revêtue, afin que cette dernière surface reste exposée, le moule mâle ayant une fonction de centrage et de retenue d'articles,

l'étalement d'un adhésif thermodurcissable à la surface de l'article destinée à recevoir le revêtement,

l'introduction du revêtement, avec maintien de celui-ci sous forme tendue à l'aide d'un cadre de retenue, entre le moule mâle portant l'article et un moule femelle ayant un profil correspondant à la surface de l'article qui doit recevoir le revêtement, le plan de pose du revêtement étant pratiquement tangent à ladite surface,

la fermeture de la presse avec maintien des moules mâle et femelle à une température correspondant à la température de durcissement de l'adhésif,

l'ouverture de la presse, l'extraction de l'article captionné, et l'enlèvement de l'excès par découpe ou cisaillage.

2. Procédé selon la revendication 1, caractérisé en ce que le revêtement est introduit entre les moules mâle et femelle sous forme d'une pièce d'étoffe ayant des dimensions proportionnées à la surface de l'article à revêtir les dimensions de la pièce dépassant d'environ 20% l'aire de la surface.

3. Procédé selon la revendication 1, dans lequel le revêtement avance de façon continue vers le cadre de mise sous tension et est découpé en morceaux après avoir été introduit entre les moules mâle et femelle de la presse.

4. Procédé selon la revendication 1 et l'une des revendications 2 et 3, caractérisé en ce qu'il met en oeuvre une étoffe élastique dont le degré d'élasticité est choisi en fonction du degré d'irrégularité et/ou des caractéristiques de surface de l'article à revêtir.

5. Procédé selon l'une quelconque des revendications précédentes, dans lequel la partie active du moule femelle est formée de caoutchouc de silicone.

6. Procédé selon les revendications précédentes, dans lequel les moules mâle et femelle sont maintenus à une température comprise entre 60 et 80°C.

7. Procédé selon l'une quelconque des revendications précédentes, dans lequel la pression de fermeture des moules mâle et femelle est comprise entre 5 et 15 kg/cm².

8. Installation destinée à la mise en oeuvre du procédé selon les revendications 1 à 7, caractérisé en ce qu'elle comprend un moule rigide et un moule femelle de caoutchouc de silicone, destinés tous deux à être maintenus à une température voulue et entre lesquels est disposée une structure portant un cadre de support et de tension de l'étoffe de revêtement destinée à être appliquée à un article placé sur le moule mâle.

9. Installation selon la revendication 8, dans laquelle le cadre de tension est orientable dans des plans perpendiculaires mutuellement et est formé par des cadres auxiliaires superposés destinés à serrer les volets périphériques de l'étoffe de revêtement.

10. Installation selon les revendications 8 et 9, caractérisé en ce qu'elle comprend des pinces commandées manuellement et destinées à fermer les cadres auxiliaires du cadre de tension.

11. Installation selon les revendications 8 et 9, caractérisé en ce qu'elle comporte des pinces hydrauliques à commande centralisée destinées à fermer les cadres auxiliaires du cadre de tension.

12. Installation selon les revendications 8, 9 et 11, caractérisée en ce qu'elle comporte un dispositif destiné à faire avancer l'étoffe de façon continue vers le cadre de tension, et un dispositif destiné à découper l'étoffe en pièce après son positionnement et son serrage dans le cadre de tension.

EP 0 184 796 B1

Fig. 1

Fig. 2

Fig. 3

1

_Fig. 4_

21

43

T

40

_Fig. 5_

30

21

40

T

43

M

M

SF

_Fig. 6_